(19) **Europäisches Patentamt**
**European Patent Office**
**Office européen des brevets**

(11) **EP 2 102 104 B1**

(12) **FASCICULE DE BREVET EUROPEEN**

(45) Date de publication et mention
de la délivrance du brevet:
**27.09.2017 Bulletin 2017/39**

(51) Int Cl.:
***C01B 33/12*** *(2006.01)*     ***C01B 33/193*** *(2006.01)*

(21) Numéro de dépôt: **07858084.2**

(22) Date de dépôt: **21.12.2007**

(86) Numéro de dépôt international:
**PCT/EP2007/064473**

(87) Numéro de publication internationale:
**WO 2008/077948 (03.07.2008 Gazette 2008/27)**

(54) **NOUVEAU PROCEDE DE PREPARATION DE SILICES PRECIPITEES PAR MISE EN OEUVRE D'UN MELANGEUR RAPIDE**

NEUES VERFAHREN ZUR HERSTELLUNG VON FÄLLUNGSKIESELSÄURE UNTER VERWENDUNG EINES SCHNELLMISCHERS

NEW METHOD FOR PREPARING PRECIPITATED SILICA USING A FAST BLENDER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611289**

(43) Date de publication de la demande:
**23.09.2009 Bulletin 2009/39**

(73) Titulaire: **Rhodia Opérations**
**75009 Paris (FR)**

(72) Inventeurs:
• **FOURNIER, Elise**
**69001 Lyon (FR)**
• **MAGNE, Jean-Claude**
**95430 Butry sur Oise (FR)**
• **NICOL, François**
**F-75014 Paris (FR)**

(74) Mandataire: **Banfi, Gaia**
**Solvay S.A. Italia**
**Viale Lombardia, 20**
**20021 Bollate (MI) (IT)**

(56) Documents cités:
**WO-A-03/016215    WO-A-03/016387**
**FR-A- 1 140 609    FR-A- 1 307 158**
**FR-A1- 2 880 351    GB-A- 2 125 780**
**US-A- 3 034 914**

**Description**

La présente invention concerne un nouveau procédé de préparation de silices précipitées, notamment mettant en oeuvre un mélangeur rapide.

Il est connu d'employer des silices précipitées comme support de catalyseur, comme absorbant de matières actives, (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), notamment d'élastomère(s).

Les procédés d'obtention de silices précipitées sont classiquement réalisés par addition des réactifs dans un(e) réacteur (cuve) agité(e). Ils peuvent présenter des inconvénients, notamment lorsque leur opération de précipitation comprend une addition simultanée de silicate et d'agent acidifiant en milieu acide.

En effet, cette étape d'addition simultanée est souvent délicate à maîtriser, ce qui diminue sensiblement la fiabilité du procédé, voire qui le rend vraiment peu fiable et donc peu robuste.

Plus généralement, la précipitation de la silice dans ces procédés comporte des étapes réactionnelles plutôt rapides, dont le contrôle peut dépendre notamment de la qualité de mélange des réactifs et donc des performances de mélange du réacteur. Du fait de la vitesse des réactions, le réacteur agité peut présenter de fortes hétérogénéités de concentration des réactifs et des produits.

En outre, la productivité de ces procédés n'est pas toujours satisfaisante, en particulier du fait de la sensibilité des caractéristiques du produit à la vitesse d'introduction des réactifs.

WO03016387 décrit un procédé de préparation de silice précipitée caractérisé en ce que la précipitation est réalisée de la manière suivante: (i) on forme un pied de cuve aqueux présentant un pH compris entre 2 et 5, (ii) on ajoute simultanément du silicate et de l'agent acidifiant, de telle manière que le pH du milieu réactionnel soit maintenu entre 2 et 5, (iii) on ajoute au milieu réactionnel du silicate jusqu'à l'obtention d'une valeur du pH du milieu réactionnel comprise entre 7 et 10, (iv) on ajoute au milieu réactionnel, simultanément, du silicate et de l'agent acidifiant de telle manière que le pH du milieu réactionnel soit maintenu entre 7 et 10 et (v) on arrête l'addition du silicate tout en continuant l'addition de l'agent acidifiant dans le milieu réactionnel jusqu'à l'obtention d'une valeur du pH du milieu réactionnel inférieure a 6.

L'invention propose un nouveau procédé de préparation de silice précipitée qui constitue une alternative aux procédés connus de préparation de silice précipitée et qui, de manière avantageuse, peut permettre de remédier aux inconvénients mentionnés ci-dessus.

Ainsi, la présente invention propose un procédé de préparation de silice précipitée du type comprenant la réaction d'un silicate avec un agent acidifiant ce par quoi l'on obtient une suspension de silice précipitée, puis la séparation et le séchage de cette suspension, ledit procédé étant caractérisé en ce que la précipitation comprend la mise en contact (le mélange) d'un silicate et d'un agent acidifiant, en milieu acide (le milieu réactionnel présente un pH acide), dans un mélangeur rapide.

L'invention propose également un procédé de préparation de silice précipitée du type comprenant la réaction d'un silicate avec un agent acidifiant ce par quoi l'on obtient une suspension de silice précipitée, puis la séparation et le séchage de cette suspension, ledit procédé étant caractérisé en ce que la précipitation comprend la mise en contact (le mélange) d'un silicate et d'un agent acidifiant, en milieu acide (le milieu réactionnel présente un pH acide), dans une zone d'écoulement turbulent selon la revendication 1. Ladite mise en contact (le mélange) du silicate et de l'agent acidifiant est réalisée à un pH (pH du milieu réactionnel) compris entre 2 et 5,5, par exemple entre 2 et 5.

Cette introduction du silicate dans le mélangeur rapide (ou dans la zone d'écoulement turbulent) est généralement effectuée en mode continu. Le milieu réactionnel résultant de la mise en contact du silicate et de l'agent acidifiant alimente un réacteur agité, ce réacteur fonctionnant en général en mode semi-continu. Dans ce réacteur, au moins une agrégation/croissance des particules de silice formées a alors généralement lieu.

Ainsi, de manière avantageuse, dans le procédé selon l'invention, un(e) réacteur (cuve), de préférence agité(e), est placé(e) en série après le mélangeur rapide.

Le mélangeur rapide peut être en particulier choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

De manière très avantageuse, on utilise dans le procédé selon la présente invention un mélangeur à jets tangentiels, un mélangeur Hartridge-Roughton ou un mélangeur (ou précipiteur) vortex, qui dérivent des dispositifs en T symétriques.

Plus particulièrement, dans le procédé conforme à l'invention, la mise en contact du silicate et de l'agent acidifiant est réalisée dans un mélangeur rapide à jets tangentiels, Hartridge-Roughton ou vortex, comprenant une chambre ayant au moins deux admissions tangentielles par lesquelles entrent séparément (mais en même temps) le silicate et l'agent acidifiant et une sortie axiale par laquelle sort le milieu réactionnel et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Les débits du silicate et de l'agent acidifiant sont par exemple déterminés de façon à ce qu'au point de confluence les deux courants de réactifs entrent en contact l'un avec l'autre dans une zone d'écoulement suffisamment turbulent.

Le procédé selon la présente invention ne comprend généralement pas de (formation de) pied de cuve initial. La précipitation est réalisée de la manière suivante :

(i) on ajoute simultanément du silicate et de l'agent acidifiant dans ledit mélangeur rapide, de préférence en mode continu, le pH du milieu réactionnel ($pH_1$) étant compris entre 2 et 5,5, en particulier entre 2 et 5, le temps de passage dans le mélangeur rapide étant inférieur à 1 seconde, en particulier, inférieur à 0,5 seconde, par exemple d'au plus 0,3 seconde,

(ii) on introduit le milieu réactionnel issu de l'étape (i) dans au moins un réacteur agité, en particulier en mode semi-continu, le pH du milieu réactionnel ($pH_2$) dans le réacteur étant régulé entre 2 et 5,5, en particulier entre 2 et 5, de préférence avec $pH_2 \geq pH_1$,

(iii) on ajoute au milieu réactionnel obtenu à l'issue de l'étape (ii), dans le réacteur agité, du silicate jusqu'à l'obtention d'une valeur du pH du milieu réactionnel comprise entre 7 et 10, en particulier entre 7,5 et 9,5,

(iv) on ajoute au milieu réactionnel obtenu à l'issue de l'étape (iii), dans le réacteur agité, simultanément, du silicate et de l'agent acidifiant, de telle manière que le pH du milieu réactionnel soit maintenu entre 7 et 10, en particulier entre 7,5 et 9,5,

(v) on arrête l'addition du silicate tout en continuant l'addition de l'agent acidifiant dans le milieu réactionnel du réacteur agité jusqu'à l'obtention d'une valeur du pH du milieu réactionnel dans le réacteur agité inférieure à 6, de préférence comprise entre 3 et 5,5, par exemple comprise entre 3 et 5

et en ce que l'ensemble de la précipitation est réalisé entre 70 et 95 °C. Il a été ainsi trouvé que la succession d'étapes particulières, et en particulier la présence d'une première addition simultanée d'agent acidifiant et de silicate en milieu acide à pH entre 2 et 5,5 dans un mélangeur rapide, notamment du type à jets tangentiels, Hartridge-Roughton ou vortex, l'alimentation d'un réacteur agité par le milieu réactionnel issu de ce mélangeur rapide et la présence d'une seconde addition simultanée d'agent acidifiant et de silicate en milieu basique à pH compris entre 7 et 10, constituaient des conditions importantes pour obtenir un procédé performant et avantageux et un meilleur contrôle des caractéristiques des silices précipitées obtenues.

L'agent acidifiant et le silicate employés dans l'étape (i) sont de préférence dilués, et par exemple préparés par dilution et chauffage en ligne de l'agent acidifiant et du silicate généralement plus concentrés utilisés dans les autres étapes du procédé de l'invention.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

La normalité de l'agent acidifiant peut être comprise entre 0,1 et 36 N, par exemple entre 0,2 et 1,5 N.

En particulier, dans le cas où l'agent acidifiant est l'acide sulfurique, sa concentration, dans l'étape (i), peut être comprise entre 5 et 50 g/l, par exemple entre 10 et 35 g/l, et sa concentration, dans les autres étapes, peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate, dans l'étape (i), peut présenter une concentration (exprimée en $SiO_2$) comprise entre 5 et 100 g/l, par exemple entre 20 et 90 g/l, en particulier entre 25 et 80 g/l ; sa concentration (exprimée en $SiO_2$), dans les autres étapes, peut être comprise entre 40 et 330 g/l, par exemple entre 60 et 300 g/l, en particulier entre 60 et 260 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, en particulier entre 3,2 et 3,8, par exemple entre 3,4 et 3,7.

La réaction du silicate avec l'agent acidifiant se fait d'une manière très spécifique selon les étapes suivantes.

La première étape (étape (i)) consiste en une addition simultanée de silicate et d'agent acidifiant dans un mélangeur rapide, de préférence en mode continu, à un pH ($pH_1$) compris entre 2 et 5,5, en particulier entre 2 et 5.

De préférence, cette addition simultanée est effectuée de telle manière (en particulier à des débits tels) que le milieu réactionnel dans le mélangeur interne présente un pH ($pH_1$) compris entre 2,5 et 5, notamment entre 3 et 4,5 ; ce pH est par exemple compris entre 3,5 et 4,5 ($pH_1 = 4,0 \pm 0,5$).

De même, de manière très avantageuse, on utilise dans ce mode de réalisation de la présente invention un mélangeur à jets tangentiels, de manière encore plus préférée un mélangeur Hartridge-Roughton ou un mélangeur (ou précipiteur) vortex.

Plus particulièrement, dans ce mode de réalisation du procédé de l'invention, la mise en contact du silicate et de l'agent acidifiant est réalisée dans un mélangeur rapide à jets tangentiels, Hartridge-Roughton ou vortex, comprenant une chambre ayant au moins deux admissions tangentielles par lesquelles entrent séparément (mais en même temps) le silicate et l'agent acidifiant et une sortie axiale par laquelle sort le milieu réactionnel et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Un électrolyte peut éventuellement être utilisé dans l'étape (i). Néanmoins, de préférence, aucun électrolyte n'est ajouté au cours du procédé de préparation, en particulier dans l'étape (i).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Même s'il peut être éventuellement envisagé, un traitement aux ultra-sons, en particulier au niveau de la mise en contact des réactifs dans le mélangeur rapide, n'est pas nécessaire et n'est de préférence pas mis en oeuvre. Dans une deuxième étape (étape (ii)), le milieu réactionnel résultant de la mise en contact du silicate et de l'agent acidifiant alimente un réacteur (cuve), soumis(e) à une agitation, ce(tte) réacteur (cuve) fonctionnant en général en mode semi-continu.

Ainsi, de manière avantageuse, dans le procédé selon l'invention, un(e) réacteur (cuve), agité(e), est placé(e) en série après le mélangeur rapide.

Le pH du milieu réactionnel ($pH_2$) dans le réacteur (cuve) soumis(e) à une agitation est régulé entre 2 et 5,5, en particulier entre 2 et 5, notamment entre 2,5 et 5, par exemple entre 3 et 4,5, voire entre 4 et 4,5 ; ce pH ($pH_2$) peut être égal à 4,4 $\pm$ 0,1.

On peut avoir $pH_2 < pH_1$ ; mais, de manière préférée, $pH_2 \geq pH_1$.

Notamment dans ce mode de réalisation, le procédé selon l'invention ne comprend généralement pas de (formation de) pied de cuve initial ; mais ce n'est pas toujours le cas : ainsi, même si ce n'est pas une variante très préférée, le réacteur agité peut éventuellement comprendre préalablement à l'addition du milieu réactionnel issu de l'étape (i) un pied de cuve aqueux présentant un pH compris entre 2 et 5,5, en particulier entre 2 et 5.

Dans l'étape (ii), afin de réguler le pH du milieu réactionnel ($pH_2$) dans le réacteur agité à la valeur désirée, entre 2 et 5,5, en particulier entre 2 et 5, notamment entre 2,5 et 5, on peut ajouter, simultanément au milieu réactionnel provenant du mélangeur rapide, de l'agent acidifiant ou plutôt, de préférence, du silicate ou un agent basifiant (tel que l'hydroxyde de sodium).

La mesure de pH, aussi bien dans le et/ou à la sortie du mélangeur rapide que dans le réacteur agité, doit être particulièrement fiable et donc mettre en oeuvre des sondes/électrodes de pH adaptées. On peut par exemple employer, pour la mesure du pH en sortie de mélangeur rapide, une sonde ou électrode de type Mettler Ingold 3200, et, pour la mesure du pH dans le réacteur agité, une sonde ou électrode de type Mettler Ingold 4800.

Puis, dans une étape (iii), on ajoute du silicate dans le milieu réactionnel se trouvant dans le réacteur, sous agitation, de manière à obtenir une valeur du pH du milieu réactionnel comprise entre 7 et 10, de préférence entre 7,5 et 9,5.

Même si, de préférence, cela n'est pas nécessaire, il peut être éventuellement effectué juste après cette étape (iii) et donc juste après l'arrêt de l'addition de silicate, un mûrissement du milieu réactionnel, notamment au pH obtenu à l'issue de l'étape (iii), et en général sous agitation ; ce mûrissement peut par exemple durer de 2 à 45 minutes, en particulier de 5 à 25 minutes et ne comporte préférentiellement ni addition d'agent acidifiant, ni addition de silicate.

Après l'étape (iii), et l'éventuel mûrissement, on procède à une nouvelle addition simultanée d'agent acidifiant et de silicate, de telle manière (en particulier à des débits tels) que le pH du milieu réactionnel soit maintenu entre 7 et 10, de préférence entre 7,5 et 9,5.

Cette seconde addition simultanée (étape (iv)) est avantageusement réalisée de manière telle que la valeur du pH du milieu réactionnel soit constamment égale (à $\pm$ 0,2 près) à celle atteinte à l'issue de l'étape précédente.

Enfin, dans une étape (v), on arrête l'addition du silicate tout en continuant l'addition d'agent acidifiant dans le milieu réactionnel de manière à obtenir une valeur du pH du milieu réactionnel inférieure à 6, de préférence comprise entre 3 et 5,5, en particulier entre 3 et 5, par exemple entre 3,5 et 5.

Il peut être éventuellement réalisé, même si, de préférence, cela n'est pas nécessaire, après cette étape (v) et donc juste après l'arrêt de l'addition d'agent acidifiant, un mûrissement du milieu réactionnel, notamment au pH obtenu à l'issue de l'étape (v), et en général sous agitation ; ce mûrissement peut par exemple durer de 2 à 45 minutes, en particulier de 5 à 20 minutes et ne comporte préférentiellement ni addition d'agent acidifiant, ni addition de silicate.

L'enceinte réactionnelle dans laquelle est mis en oeuvre l'ensemble des étapes (ii) à (v) est munie d'un équipement d'agitation et, généralement, d'un équipement de chauffage adéquats.

L'ensemble de la précipitation est réalisé entre 70 et 95 °C, en particulier entre 75 et 95 °C.

Selon une variante de l'invention, l'ensemble de la réaction du silicate avec l'agent acidifiant est effectué à une température constante, habituellement comprise entre 70 et 95 °C, en particulier entre 75 et 95 °C.

Selon une variante préférée de l'invention, la température de fin de réaction est plus élevée que la température de début de réaction : ainsi, on maintient la température au début de la réaction (par exemple au cours des étapes (i) et (ii), la température dans l'étape (ii) étant généralement égale ou supérieure à celle de l'étape (i)) de préférence entre 70 et 86 °C, par exemple entre 70 et 85 °C ou entre 76 et 86 °C, puis on augmente la température (par exemple au cours de l'étape (iii)), de préférence jusqu'à une valeur comprise entre 85 (ou 86) et 95 °C, valeur à laquelle elle est maintenue (par exemple au cours des étapes (iv) et (v)) jusqu'à la fin de la réaction.

Dans le procédé selon l'invention, en particulier selon le mode de réalisation préféré, la mise en contact des réactifs de départ (agent acidifiant et silicate) est très homogène et très rapide ; tous les réactifs réagissent préférentiellement de la même façon. Le temps de passage dans la zone d'écoulement turbulent ou dans le mélangeur rapide (volume interne du mélangeur / débit total des réactifs de départ) est inférieur à 1 seconde, en particulier inférieur à 0,5 seconde, par exemple d'au plus 0,3 seconde, voire d'au plus 0,1 seconde ; il est généralement supérieur à 0,001 seconde, notamment supérieur à 0,01 seconde, par exemple supérieur à 0,03 seconde. Plus particulièrement lors d'une mise en oeuvre industrielle, ce temps de passage dans le mélangeur rapide peut être compris notamment entre 0,04 et 0,3 seconde, par exemple entre 0,05 et 0,25 seconde. De manière avantageuse, à l'issue de ce temps de passage, au moins 95 %, de préférence au moins 99 %, en volume du mélange est homogène.

La vitesse d'agitation dans le réacteur (cuve), notamment dans le mode de réalisation préférée de l'invention, peut être par exemple comprise entre 60 et 700 tours/min, en particulier entre 75 et 300 tours/min.

Le procédé selon l'invention permet une maîtrise de l'étape d'addition simultanée des réactifs de départ et permet ainsi d'alimenter le réacteur agité par un milieu réactionnel homogène, ce qui rend possible la suppression des difficultés d'un procédé dont l'opération de précipitation est totalement mise en oeuvre en cuve agitée.

L'un des avantages du procédé selon l'invention, notamment selon le mode de réalisation préféré de l'invention (dans lequel l'étape d'addition simultanée des réactifs de départ est en général plutôt relativement courte), est qu'il peut permettre, par la mise en oeuvre, combinée à d'autres étapes spécifiques, d'un mélangeur rapide, en particulier à jets tangentiels, Hartridge-Roughton ou vortex, placé en série avant le réacteur, de supprimer notamment les hétérogénéités constatées dans un procédé dont l'opération de précipitation est entièrement mise en oeuvre en cuve agitée , on peut constater une diminution de la durée d'introduction des réactifs de départ, un meilleur contrôle du procédé et des caractéristiques de la silice.

En particulier, le procédé selon le mode de réalisation préféré de l'invention est un procédé fiable, robuste, permettant une maîtrise de la qualité de la silice préparée, et présente avantageusement une productivité très satisfaisante.

On obtient, à l'issue des étapes qui viennent d'être décrites, une bouillie de silice qui est ensuite séparée (séparation liquide-solide).

La séparation mise en oeuvre dans le procédé de préparation selon l'invention comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides.

En général, lorsque la filtration est effectuée à l'aide d'un filtre presse, on utilise un atomiseur à turbines ou un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à billes. Le délitage est généralement effectué en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Le procédé de préparation selon l'invention permet notamment d'obtenir des silices précipitées, qui, d'une part, sont hautement structurées et non friables, et, d'autre part, présentent de préférence une distribution granulométrique et/ou une répartition poreuse particulières.

Dans l'exposé qui suit, la surface spécifique BET est déterminée selon la méthode de BRUNAUER - EMMETT - TELLER décrite dans "The journal of the American Chemical Society", Vol. 60, page 309, février 1938 et correspondant à la norme internationale ISO 5794/1 (annexe D).

La surface spécifique CTAB est la surface externe déterminée selon la norme NF T 45007 (novembre 1987) (5.12).

La prise d'huile DOP est déterminée selon la norme NF T 30-022 (mars 1953) en mettant en oeuvre le dioctylphtalate.

Le pH est mesuré selon la norme ISO 787/9 (pH d'une suspension à 5 % dans l'eau).

La méthode d'analyse granulométrique XDC par sédimentation centrifuge, à l'aide de laquelle est mesuré, d'une part, les largeurs de distribution de taille d'objets de la silice, et, d'autre part, le mode XDC illustrant sa taille d'objets, est décrite ci-après :

*Matériel nécessaire*

- granulomètre à sédimentation centrifuge BI-XDC (BROOKHAVEN-INSTRUMENT X DISC CENTRIFUGE) commercialisé par la société Brookhaven Instrument Corporation)
- bécher forme haute de 50 ml
- éprouvette graduée de 50 ml
- sonde à ultra-sons BRANSON 1500 watts, sans embout, de diamètre de 13 mm,
- eau permutée
- cristallisoir rempli de glace
- agitateur magnétique

*Conditions de mesure*

- version DOS 1.35 du logiciel (fournie par le constructeur du granulomètre)
- mode fixe
- vitesse de rotation
- durée de l'analyse : 120 minutes
- densité (silice) : 2,1
- volume de la suspension à prélever : 15 ml

*Préparation de l'échantillon*

Ajouter dans le bécher forme haute 3,2 g de silice et 40 ml d'eau permutée.
Mettre le bécher contenant la suspension dans le cristallisoir rempli de glace.
Plonger la sonde à ultra-sons dans le bécher.
Désagglomérer la suspension pendant 16 minutes à l'aide de la sonde BRANSON de 1500 watts (utilisée à 60 % de la puissance maximale).
Lorsque la désagglomération est terminée, mettre le bécher sur un agitateur magnétique.

*Préparation du granulomètre*

Allumer l'appareil et laisser chauffer pendant 30 minutes.
Rincer 2 fois le disque à l'eau permutée.
Introduire dans le disque 15 ml de l'échantillon à analyser et mettre en agitation.
Entrer dans le logiciel les conditions de mesure mentionnées ci-dessus.
Faire les mesures.
Lorsque les mesures ont été effectuées :

Arrêter la rotation du disque.
Rincer plusieurs fois le disque à l'eau permutée.
Arrêter l'appareil.

*Résultats*

Dans le registre d'appareil, relever les valeurs des diamètres passant à 16 %, 50 % (ou médiane) et 84 % (% massique) ainsi que la valeur du Mode (la dérivée de la courbe granulométrique cumulée donne une courbe de fréquence dont l'abscisse du maximum (abscisse de la population principale) est appelé le Mode).
La largeur Ld de distribution de taille d'objets, mesurée par granulométrie XDC, après désagglomération aux ultra-sons (dans l'eau), correspond au rapport (d84 - d16)/d50 dans lequel dn est la taille pour laquelle on a n % de particules (en masse) de taille inférieure à cette taille (la largeur Ld de distribution est donc calculée sur la courbe granulométrique cumulée, prise dans sa totalité).

La largeur L'd de distribution de taille d'objets inférieure à 500 nm, mesurée par granulométrie XDC, après désagglomération aux ultra-sons (dans l'eau), correspond au rapport (d84 - d16)/d50 dans lequel dn est la taille pour laquelle on a n % de particules (en masse), par rapport aux particules de taille inférieure à 500 nm, de taille inférieure à cette taille (la largeur L'd de distribution est donc calculée sur la courbe granulométrique cumulée, tronquée au-dessus de 500 nm).

De plus, on peut mesurer, à l'aide de cette méthode d'analyse granulométrique XDC par sédimentation centrifuge, une taille moyenne (en masse) des particules (c'est-à-dire des particules secondaires ou agrégats), notée $d_w$, après dispersion, par désagglomération aux ultra-sons, de la silice dans l'eau. La méthode diffère de celle précédemment décrite sur le fait que la suspension formée (silice + eau permutée) est désagglomérée, d'une part, pendant 8 minutes, et, d'autre part, à l'aide d'une sonde à ultra-sons VIBRACELL 1,9 cm (commercialisée par la société Bioblock) de 1500 watts (utilisée à 60 % de la puissance maximale). Après analyse (sédimentation pendant 120 minutes) la distribution en masse des tailles de particules est calculée par le logiciel du granulomètre. La moyenne géométrique en masse des tailles de particules («geometric mean (Xg)» selon l'appellation du logiciel), notée $d_w$, est calculée par le logiciel à partir de l'équation suivante :

$$\log d_w = (\Sigma(i{=}1 \text{ à } i{=}n) \, m_i \log d_i) \, / \, \Sigma(i{=}1 \text{ à } i{=}n) \, m_i, \text{ } m_i \text{ étant la masse de}$$

$m_i$ étant la masse de l'ensemble des objets dans la classe de taille $d_i$.

Les volumes poreux donnés sont mesurés par porosimétrie au mercure ; la préparation de chaque échantillon se fait comme suit : chaque échantillon est préalablement séché pendant 2 heures en étuve à 200 °C, puis placé dans un récipient à essai dans les 5 minutes suivant sa sortie de l'étuve et dégazé sous vide, par exemple à l'aide d'une pompe à tiroirs rotatifs ; les diamètres de pores (porosimètre MICROMERITICS Autopore III 9420) sont calculés par la relation de WASHBURN avec un angle de contact théta égal à 140° et une tension superficielle gamma égale à 484 Dynes/cm (ou N/m).

$V_{(d5 - d50)}$ représente le volume poreux constitué par les pores de diamètres compris entre d5 et d50, et $V_{(d5 - d100)}$ représente le volume poreux constitué par les pores de diamètres compris entre d5 et d100, dn étant ici le diamètre de pores pour lequel n% de la surface totale de tous les pores est apporté par les pores de diamètre supérieur à ce diamètre (la surface totale des pores ($S_0$) peut être déterminée à partir de la courbe d'intrusion de mercure).

La largeur de distribution poreuse ldp s'obtient à partir de la courbe de répartition poreuse, volume de pores (ml/g) en fonction du diamètre de pores (nm) : on relève les coordonnées du point S correspondant à la population principale, à savoir les valeurs du diamètre (nm) $X_S$ et du volume poreux (ml/g) $Y_S$. ; on trace une droite d'équation Y = $Y_S$/2. ; cette droite coupe la courbe de répartition poreuse en deux points A et B ayant pour abscisse (nm) respectivement $X_A$ et $X_B$ de part et d'autre de $X_S$ ; la largeur de distribution poreuse ldp est égale au rapport ($X_A$ - $X_B$) / $X_S$.

Dans certains cas, l'aptitude à la dispersion (et à la désagglomération) des silices obtenues par le procédé selon l'invention peut être quantifiée au moyen de tests spécifiques de désagglomération.

L'un des tests de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian $\varnothing_{50S}$ (ou diamètre médian Sympatec) que l'on obtient est d'autant plus faible que la silice présente une aptitude à la désagglomération élevée. On peut déterminer également le rapport (10 x volume de suspension introduite (en ml))/densité optique de la suspension détectée par le granulomètre (cette densité optique est de l'ordre de 20). Ce rapport est indicatif du taux de particules de taille inférieure à 0,1 $\mu$m qui ne sont pas détectées par le granulomètre. Ce rapport est appelé facteur de désagglomération (Sympatec) aux ultra-sons ($F_{DS}$).

Un autre test de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80 % de la puissance maximale, équipé d'une sonde de diamètre 19 mm. La mesure granulométrique est effectuée par diffraction laser sur un granulomètre MALVERN (Mastersizer 2000).

On pèse dans un pilulier (hauteur : 6 cm et diamètre : 4 cm) 1 gramme de silice et l'on complète à 50 grammes par ajout d'eau permutée : on réalise ainsi une suspension aqueuse à 2 % de silice qui est homogénéisée pendant 2 minutes par agitation magnétique. On procède ensuite à la désagglomération sous ultra-sons pendant 420 secondes. On réalise ensuite la mesure granulométrique après avoir introduit dans la cuve du granulomètre la totalité de la suspension homogénéisée.

La valeur du diamètre médian $\emptyset_{50M}$ (ou diamètre médian Malvern) que l'on obtient est d'autant plus faible que la silice présente une aptitude à la désagglomération élevée. On peut déterminer également le rapport (10 x valeur de l'obscuration du laser bleu) / valeur de l'obscuration du laser rouge. Ce rapport est indicatif du taux de particules de taille inférieure à 0,1 $\mu$m. Ce rapport est appelé facteur de désagglomération (Malvern) aux ultra-sons ($F_{DM}$).

Le nombre de Sears est déterminé selon la méthode décrite par G. W. SEARS dans un article de « Analytical Chemistry, vol. 28, No. 12, décembre 1956 », intitulé «Determination of specific surface area of colloidal silica by titration with sodium hydroxyde ».

Le nombre de Sears est le volume de solution d'hydroxyde de sodium 0,1 M nécessaire pour élever le pH de 4 à 9 d'une suspension de silice à 10 g/l en milieu chlorure de sodium à 200 g/l.

Pour cela, on prépare, à partir de 400 grammes de chlorure de sodium, une solution de chlorure de sodium à 200 g/l acidifiée à pH 3 avec une solution d'acide chlorhydrique 1 M. Les pesées sont effectuées à l'aide d'une balance de précision METTLER. On ajoute délicatement 150 ml de cette solution de chlorure de sodium dans un bécher de 250 ml dans lequel a été préalablement introduit une masse M (en g) de l'échantillon à analyser correspondant à 1,5 gramme de silice sèche. On applique à la dispersion obtenue des ultra-sons pendant 8 minutes (sonde à ultra-sons BRANSON de 1500 W, amplitude de 60 %, diamètre de 13 mm), le bécher étant dans un cristallisoir rempli de glace. Puis on homogénéise la solution obtenue par agitation magnétique, à l'aide d'un barreau aimanté de dimensions 25 mm x 5 mm. On vérifie que le pH de la suspension est inférieur à 4, en l'ajustant si nécessaire avec une solution d'acide chlorhydrique 1 M. On ajoute ensuite, à l'aide d'un pHmètre titreur Metrohm (titroprocesseur 672, dosimat 655), préalablement étalonné à l'aide de solutions tampon pH 7 et pH 4, une solution d'hydroxyde de sodium 0,1 M à un débit de 2 ml/min. (Le pHmètre titreur a été programmé comme suit: 1) Appeler le programme «Get pH», 2) Introduire les paramètres suivants : pause (temps d'attente avant le début du titrage) 3 s, débit de réactif : 2 ml/min, anticipation (adaptation de la vitesse de titrage à la pente de la courbe de pH) : 30, stop pH : 9,40, EP critique (sensibilité de détection du point d'équivalence) : 3, report (paramètres d'impression du rapport de titrage) : 2,3,5 (c'est-à-dire création d'un rapport détaillé, liste de points de mesure, courbe de titrage)). On détermine par interpolation les volumes $V_1$ et $V_2$ exacts de la solution d'hydroxyde de sodium ajoutée pour obtenir respectivement un pH de 4 et un pH de 9. Le nombre de Sears pour 1,5 gramme de silice sèche est égal à (($V_2$ - $V_1$) x 150) / (ES x M), avec :

$V_1$ : volume de solution d'hydroxyde de sodium 0,1 M à pH = 4
$V_2$ : volume de solution d'hydroxyde de sodium 0,1 M à pH = 9
M : masse de l'échantillon (g)
ES : extrait sec en %

Le procédé selon l'invention, en particulier selon le mode de réalisation préférée de l'invention, permet de préparer une silice précipitée possédant :

- une surface spécifique CTAB ($S_{CTAB}$) comprise entre 40 et 525 m²/g,
- une surface spécifique BET ($S_{BET}$) comprise entre 45 et 550 m²/g,
- une largeur Ld ((d84 - d16)/d50) de distribution de taille d'objets mesurée par granulométrie XDC après désagglomération aux ultra-sons d'au moins 0,91, en particulier d'au moins 0,94, et
- une répartition du volume poreux en fonction de la taille des pores telle que le rapport $V_{(d5-d50)}/V_{(d5-d100)}$ est d'au moins 0,66, en particulier d'au moins 0,68.

Cette silice possède par exemple :

- une largeur Ld ((d84 - d16)/d50) de distribution de taille d'objets mesurée par granulométrie XDC après désagglomération aux ultra-sons d'au moins 1,04 et
- une répartition du volume poreux en fonction de la taille des pores telle que le rapport $V_{(d5-d50)}/V_{(d5-d100)}$ est d'au moins 0,71.

Cette silice peut présenter un rapport $V_{(d5 - d50)}/V_{(d5 - d100)}$ d'au moins 0,73, en particulier d'au moins 0,74. Ce rapport peut être d'au moins 0,78, notamment d'au moins 0,80, voire d'au moins 0,84.

Le procédé selon l'invention, en particulier selon le mode de réalisation préférée de l'invention, permet de préparer aussi une silice précipitée possédant

- une surface spécifique CTAB ($S_{CTAB}$) comprise entre 40 et 525 m$^2$/g,
- une surface spécifique BET ($S_{BET}$) comprise entre 45 et 550 m$^2$/g,
- une largeur de distribution poreuse ldp supérieure à 0,70, en particulier supérieure à 0,80, notamment supérieure à 0,85.

Cette silice peut présenter une largeur de distribution poreuse ldp supérieure à 1,05, par exemple à 1,25, voire à 1,40.

Cette silice possède de préférence une largeur Ld ((d84 - d16)/d50) de distribution de taille d'objets mesurée par granulométrie XDC après désagglomération aux ultra-sons d'au moins 0,91, en particulier d'au moins 0,94, par exemple d'au moins 1,0.

Le procédé selon l'invention, en particulier selon le mode de réalisation préférée de l'invention, permet également de préparer une silice précipitée possédant :

- une surface spécifique CTAB ($S_{CTAB}$) comprise entre 40 et 525 m$^2$/g,
- une surface spécifique BET ($S_{BET}$) comprise entre 45 et 550 m$^2$/g,
- une largeur L'd ((d84 - d16)/d50) de distribution de taille d'objets inférieure à 500 nm, mesurée par granulométrie XDC après désagglomération aux ultra-sons, d'au moins 0,95 et
- une répartition du volume poreux en fonction de la taille des pores telle que le rapport $V_{(d5 - d50)}/V_{(d5 - d100)}$ est d'au moins 0,71.

Cette silice peut présenter un rapport $V_{(d5 - d50)}/V_{(d5 - d100)}$ d'au moins 0,73, en particulier d'au moins 0,74. Ce rapport peut être d'au moins 0,78, notamment d'au moins 0,80, voire d'au moins 0,84.

Le procédé selon l'invention, en particulier selon le mode de réalisation préférée de l'invention, permet en outre de préparer une silice précipitée possédant :

- une surface spécifique CTAB ($S_{CTAB}$) comprise entre 40 et 525 m$^2$/g,
- une surface spécifique BET ($S_{BET}$) comprise entre 45 et 550 m$^2$/g,
- une largeur L'd ((d84 - d16)/d50) de distribution de taille d'objets inférieure à 500 nm, mesurée par granulométrie XDC après désagglomération aux ultra-sons, d'au moins 0,90, en particulier d'au moins 0,92, et
- une répartition du volume poreux en fonction de la taille des pores telle que le rapport $V_{(d5-d50)}N_{(d5-d100)}$ est d'au moins 0,74.

Cette silice peut présenter un rapport $V_{(d5 - d50)}/V_{(d5 - d100)}$ d'au moins 0,78, notamment d'au moins 0,80, voire d'au moins 0,84.

Dans ces silices pouvant être préparées par le procédé selon le mode de réalisation préférée de l'invention, le volume poreux apporté par les pores les plus gros représente habituellement la plus grande partie de la structure.

Elles peuvent présenter à la fois une largeur Ld de distribution de taille d'objets d'au moins 1,04 et une largeur L'd de distribution de taille d'objets (inférieure à 500 nm) d'au moins 0,95.

La largeur Ld de distribution de taille d'objets de ces silices peut dans certains cas être d'au moins 1,10, en particulier d'au moins 1,20 ; elle peut être d'au moins 1,30, par exemple d'au moins 1,50, voire d'au moins 1,60.

De même, leur largeur L'd de distribution de taille d'objets (inférieure à 500 nm) peut être par exemple d'au moins 1,0, en particulier d'au moins 1,10, notamment d'au moins 1,20.

En général, ces silices possèdent une chimie de surface particulière, telle qu'elles présentent un rapport (nombre de Sears x 1000) / (surface spécifique BET ($S_{BET}$)) inférieur à 60, de préférence inférieur à 55, par exemple inférieur à 50.

Elles présentent généralement une taille d'objets élevée et donc atypique, qui peut être telle que le mode de leur distribution granulométrique mesuré par granulométrie XDC après désagglomération aux ultra-sons (dans l'eau) réponde à la condition :

Mode XDC (nm) $\geq$ (5320 / $S_{CTAB}$ (m²/g)) + 8, voire à la condition : Mode XDC (nm) $\geq$ (5320 / $S_{CTAB}$ (m²/g)) + 10.

Elles peuvent posséder par exemple un volume poreux ($V_{80}$) constitué par les pores de diamètres compris entre 3,7 et 80 nm d'au moins 1,35 cm³/g, en particulier d'au moins 1,40 cm³/g, voire d'au moins 1,50 cm³/g.

Leur diamètre médian ($\varnothing_{50S}$), après désagglomération aux ultra-sons, est en général inférieur à 8,5 $\mu$m ; il peut être inférieur à 6,0 $\mu$m, par exemple inférieur à 5,5 $\mu$m.

De même, leur diamètre médian ($\varnothing_{50M}$), après désagglomération aux ultra-sons, est en général inférieur à 8,5 $\mu$m ; il peut être inférieur à 6,0 $\mu$m, par exemple inférieur à 5,5 $\mu$m.

Ces silices peuvent présenter un facteur de désagglomération aux ultra-sons ($F_{DS}$) supérieur à 3 ml, en particulier supérieur à 3,5 ml, notamment supérieur à 4,5 ml.

Leur facteur de désagglomération aux ultra-sons ($F_{DM}$) peut être supérieur à 6, en particulier supérieur à 7, notamment supérieur à 11.

Elles présentent par exemple une taille moyenne (en masse) de particules, mesurée par granulométrise XDC après désagglomération aux ultra-sons, $d_w$, comprise entre 20 et 300 nm, notamment entre 30 et 300 nm, en particulier entre 40 et 160 nm.

Elles peuvent présentent une distribution de taille de particules telle que $d_w \geq$ (16500 / $S_{CTAB}$) - 30.

Selon un mode de réalisation, les silices préparées selon l'invention présentent en général :

- une surface spécifique CTAB comprise entre 60 et 330 m²/g, en particulier entre 80 et 290 m²/g,
- une surface spécifique BET comprise entre 70 et 350 m²/g, en particulier entre 90 et 320 m²/g.

Leur surface spécifique CTAB peut être comprise entre 90 et 230 m²/g,

De même, leur surface spécifique BET peut être comprise entre 110 et 270 m²/g, notamment entre 115 et 250 m²/g, par exemple entre 135 et 235 m²/g.

Selon un autre mode de réalisation, les silices préparées selon l'invention présentent en général :

- une surface spécifique CTAB comprise entre 40 et 380 m²/g, en particulier entre 45 et 280 m²/g,
- une surface spécifique BET comprise entre 45 et 400 m²/g, en particulier entre 50 et 300 m²/g.

Leur surface spécifique CTAB peut être comprise entre 115 et 260 m²/g, notamment entre 145 et 260 m²/g.

De même, leur surface spécifique BET peut être comprise entre 120 et 280 m²/g, notamment entre 150 et 280 m²/g.

Les silices préparées selon la présente invention peuvent présenter une certaine microporosité ; ainsi, ces silices sont habituellement telles que ($S_{BET}$ - $S_{CTAB}$) $\geq$ 5 m²/g, de préférence $\geq$ 15 m²/g, par exemple $\geq$ 25 m²/g.

Cette microporosité n'est pas en général trop importante ; ces silices sont généralement telles que ($S_{BET}$ - $S_{CTAB}$) < 50 m²/g, de préférence < 40 m²/g.

Le pH des silices obtenues selon l'invention est habituellement compris entre 6,3 et 7,8, notamment entre 6,6 et 7,5.

Elles possèdent une prise d'huile DOP variant, le plus souvent, entre 220 et 330 ml/100g, par exemple entre 240 et 300 ml/100g.

Elles peuvent se présenter sous forme de billes sensiblement sphériques de taille moyenne d'au moins 80 $\mu$m.

Cette taille moyenne des billes peut être d'au moins 100 $\mu$m, par exemple d'au moins 150 $\mu$m ; elle est généralement d'au plus 300 $\mu$m et se situe de préférence entre 100 et 270 $\mu$m. Cette taille moyenne est déterminée selon la norme NF X 11507 (décembre 1970) par tamisage à sec et détermination du diamètre correspondant à un refus cumulé de 50 %.

Elles peuvent également se présenter sous forme de poudre de taille moyenne d'au moins 15 $\mu$m ; celle-ci est par exemple comprise entre 15 et 60 $\mu$m (notamment entre 20 et 45 $\mu$m) ou entre 30 et 150 $\mu$m (notamment entre 45 et 120 $\mu$m).

Elles peuvent aussi se présenter sous forme de granulés de taille d'au moins 1 mm, en particulier comprise entre 1 et 10 mm, selon l'axe de leur plus grande dimension (longueur).

Les silices préparées par le procédé selon l'invention, notamment selon le mode de réalisation préférée de l'invention, peuvent trouver une application intéressante dans le renforcement des polymères, naturels ou synthétiques.

Les compositions de polymère(s) dans lesquelles elles peuvent être utilisées, à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques. par exemple les polybutadiènes (BR), les polyisoprènes (IR), les copolymères de styrène-butadiène (SBR, notamment ESBR (émulsion) ou SSBR (solution)). On peut également citer le caoutchouc naturel (NR).

Les compositions de polymère(s) peuvent être vulcanisées au soufre ou réticulées notamment aux péroxydes.

En général, les compositions de polymère(s) comprennent en outre au moins un agent de couplage (silice/polymère).

On peut notamment utiliser comme agent de couplage, à titre d'exemple non limitatif, un silane polysulfuré, dits "symétrique" ou "asymétrique", comme le tétrasulfure de monoéthoxydiméthylsilylpropyle.

La proportion en poids de silice dans la composition de polymère(s) représente habituellement 20 à 80 %, par exemple 30 à 70 %, de la quantité du (des) polymère(s).

La silice préparée selon le procédé de l'invention peut constituer la totalité de la charge renforçante de la composition de polymère(s).

A cette silice peut cependant être éventuellement associée une autre charge renforçante, comme en particulier une silice hautement dispersible commerciale telle que par exemple la silice Z1165MP, la silice Z1115MP, une autre charge inorganique renforçante telle que par exemple l'alumine, voire même une charge organique renforçante, notamment du noir de carbone.

On peut citer, à titre d'exemples, non limitatifs, d'articles finis à base des compositions de polymère(s) décrites précédemment (notamment à base des vulcanisats correspondants) les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmission.

Les silices préparées par le procédé selon l'invention peuvent être également employées comme support de catalyseur, comme absorbant de matières actives (en particulier support de liquides, par exemple utilisés dans l'alimentation, tels que les vitamines (vitamine E), le chlorure de choline), comme agent viscosant, texturant ou anti-mottant, comme élément pour séparateurs de batteries, comme additif pour dentifrice, pour papier.

Les exemples suivants illustrent l'invention sans toutefois en limiter la portée.

EXEMPLE 1

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.

On introduit simultanément dans le mélangeur rapide pendant 8 minutes et 30 secondes une solution de silicate de sodium (de rapport pondéral $SiO_2/Na_2O$ égal à 3,45), présentant une concentration de 50 g/L et une température de 77 °C, à un débit de 377 L/h, et de l'acide sulfurique, présentant une concentration de 21 g/L et une température de 77 °C, à un débit régulé de manière à maintenir le pH du milieu réactionnel à une valeur de 4,0.

Ce milieu réactionnel est réceptionné dans la cuve agitée, dans laquelle on introduit simultanément une solution de silicate de sodium à un débit régulé de manière à maintenir le pH du milieu réactionnel à une valeur de 4,2. La température est portée à 84 °C.

Au terme des 8 minutes et 30 secondes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.

Une nouvelle addition simultanée de silicate de sodium et d'acide sulfurique est réalisée pendant 40 minutes dans la cuve agitée, avec un débit de silicate de sodium de 35 L/h, à la concentration de 235 g/L, et un débit d'acide sulfurique, de concentration de 80 g/L, régulé de manière à maintenir le pH du milieu réactionnel à une valeur de 8,0.

A l'issue de cette dernière addition simultanée, le milieu réactionnel est amené à un pH de 3,9 en 5 minutes par de l'acide sulfurique de concentration égale à 80 g/L.

La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport Al/SiO2 de 0,3 % et de l'acide sulfurique jusqu'à atteindre un pH de 6,5. La bouillie résultante (ayant un extrait sec de 11 %) est atomisée au moyen d'un atomiseur à turbines.

EXEMPLE 2

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.
On introduit simultanément dans le mélangeur rapide pendant 7 minutes une solution de silicate de sodium (de rapport pondéral $SiO_2/Na_2O$ égal à 3,45), présentant une concentration de 50 g/L et une température de 79 °C, à un débit de 458 L/h, et de l'acide sulfurique, présentant une concentration de 21 g/L et une température de 79 °C, à un débit régulé de manière à maintenir le pH du milieu réactionnel à une valeur de 4,6.
Ce milieu réactionnel est réceptionné dans la cuve agitée, dans laquelle on introduit simultanément une solution d'acide sulfurique à un débit régulé de manière à maintenir le pH du milieu réactionnel à une valeur de 4,3. La température est portée à 81 °C.
Au terme des 7 minutes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.
Une nouvelle addition simultanée de silicate de sodium et d'acide sulfurique est réalisée pendant 40 minutes dans la cuve agitée, avec un débit de silicate de sodium de 34 L/h, à la concentration de 235 g/L, et un débit d'acide sulfurique, de concentration de 80 g/L, régulé de manière à maintenir le pH du milieu réactionnel à une valeur de 8,0.
A l'issue de cette dernière addition simultanée, le milieu réactionnel est amené à un pH de 3,9 en 5 minutes par de l'acide sulfurique de concentration égale à 80 g/L.
La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport Al/SiO2 de 0,3 % et de l'acide sulfurique jusqu'à atteindre un pH de 6,5. La bouillie résultante (ayant un extrait sec de 11 %) est atomisée au moyen d'un atomiseur à turbines.

EXEMPLE 3

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.
On introduit simultanément dans le mélangeur rapide pendant 8 minutes et 30 secondes une solution de silicate de sodium (de rapport pondéral $SiO_2/Na_2O$ égal à 3,45), présentant une concentration de 50 g/L et une température de 82 °C, à un débit de 382 L/h, et de l'acide sulfurique, présentant une concentration de 21 g/L et une température de 82 °C, à un débit régulé de manière à maintenir le pH du milieu réactionnel à une valeur de 3,1.
Ce milieu réactionnel est réceptionné dans la cuve agitée, dans laquelle on introduit simultanément une solution d'acide sulfurique à un débit régulé de manière à maintenir le pH du milieu réactionnel à une valeur de 4,3. La température est maintenue à 82 °C.
Au terme des 8 minutes et 30 secondes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.
Une nouvelle addition simultanée de silicate de sodium et d'acide sulfurique est réalisée pendant 40 minutes dans la cuve agitée, avec un débit de silicate de sodium de 34 L/h, à la concentration de 235 g/L, et un débit d'acide sulfurique, de concentration de 80 g/L, régulé de manière à maintenir le pH du milieu réactionnel à une valeur de 8,0.
A l'issue de cette dernière addition simultanée, le milieu réactionnel est amené à un pH de 3,9 en 5 minutes par de l'acide sulfurique de concentration égale à 80 g/L.
La bouillie obtenue est filtrée et lavée sur filtre-presse (extrait sec du gâteau de 21 %). Après dilution, le gâteau

EP 2 102 104 B1

obtenu est délité mécaniquement, en ajoutant de l'aluminate de sodium (rapport pondéral $Na_2O/Al_2O_3$ de 0,8), dans un rapport Al/SiO2 de 0,3 % et de l'acide sulfurique jusqu'à atteindre un pH de 6,5. La bouillie résultante (ayant un extrait sec de 11 %) est atomisée au moyen d'un atomiseur à turbines.

EXEMPLE 4

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.
On introduit simultanément dans le mélangeur rapide pendant 10 minutes une solution de silicate de sodium (de rapport pondéral $SiO_2/Na_2O$ égal à 3,45), présentant une concentration de 50 g/L et une température de 79 °C, à un débit de 321 L/h, et de l'acide sulfurique, présentant une concentration de 21 g/L et une température de 79 °C, à un débit régulé de manière à maintenir le pH du milieu réactionnel à une valeur de 4,6.
Ce milieu réactionnel est réceptionné dans la cuve agitée, dans laquelle on introduit simultanément une solution d'acide sulfurique à un débit régulé de manière à maintenir le pH du milieu réactionnel à une valeur de 4,4. La température est portée à 81 °C.
Au terme des 10 minutes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.
Une nouvelle addition simultanée de silicate de sodium et d'acide sulfurique est réalisée pendant 40 minutes dans la cuve agitée, avec un débit de silicate de sodium de 34 L/h, à la concentration de 235 g/L, et un débit d'acide sulfurique, de concentration de 80 g/L, régulé de manière à maintenir le pH du milieu réactionnel à une valeur de 8,0.
A l'issue de cette dernière addition simultanée, le milieu réactionnel est amené à un pH de 3,9 en 5 minutes par de l'acide sulfurique de concentration égale à 80 g/L.
La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport Al/SiO2 de 0,3 % et de l'acide sulfurique jusqu'à atteindre un pH de 6,5. La bouillie résultante (ayant un extrait sec de 11 %) est atomisée au moyen d'un atomiseur à turbines.

EXEMPLE 5

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à buses.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.
On introduit simultanément dans le mélangeur rapide pendant 8 minutes et 30 secondes une solution de silicate de sodium (de rapport pondéral $SiO_2/Na_2O$ égal à 3,45), présentant une concentration de 50 g/L et une température de 82 °C, à un débit de 384 L/h, et de l'acide sulfurique, présentant une concentration de 21 g/L et une température de 82 °C, à un débit régulé de manière à maintenir le pH du milieu réactionnel à une valeur de 4,0.
Ce milieu réactionnel est réceptionné dans la cuve agitée, dans laquelle on introduit simultanément une solution de silicate de sodium à un débit régulé de manière à maintenir le pH du milieu réactionnel à une valeur de 4,4. La température est maintenue à 82 °C.
Au terme des 8 minutes et 30 secondes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.
Une nouvelle addition simultanée de silicate de sodium et d'acide sulfurique est réalisée pendant 40 minutes dans la cuve agitée, avec un débit de silicate de sodium de 35 L/h, à la concentration de 235 g/L, et un débit d'acide sulfurique, de concentration de 80 g/L, régulé de manière à maintenir le pH du milieu réactionnel à une valeur de 8,0.

A l'issue de cette dernière addition simultanée, le milieu réactionnel est amené à un pH de 4,0 en 5 minutes par de l'acide sulfurique de concentration égale à 80 g/L.

La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport $Al/SiO_2$ de 0,3 % et de l'acide sulfurique jusqu'à atteindre un pH de 6,5. La bouillie résultante (ayant un extrait sec de 18,6 %) est atomisée au moyen d'un atomiseur à buses.

EXEMPLE 6

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.

On introduit simultanément dans le mélangeur rapide pendant 8 minutes et 30 secondes une solution de silicate de sodium (de rapport pondéral $SiO_2/Na_2O$ égal à 3,45), présentant une concentration de 50 g/L et une température de 78 °C, à un débit de 376 L/h, et de l'acide sulfurique, présentant une concentration de 21 g/L et une température de 78 °C, à un débit régulé de manière à maintenir le pH du milieu réactionnel à une valeur de 3,9.

Ce milieu réactionnel est réceptionné dans la cuve agitée, dans laquelle on introduit simultanément une solution de silicate de sodium à un débit régulé de manière à maintenir le pH du milieu réactionnel à une valeur de 4,1. La température est portée à 85 °C.

Au terme des 8 minutes et 30 secondes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.

Une nouvelle addition simultanée de silicate de sodium et d'acide sulfurique est réalisée pendant 40 minutes dans la cuve agitée, avec un débit de silicate de sodium de 33 L/h, à la concentration de 235 g/L, et un débit d'acide sulfurique, de concentration de 80 g/L, régulé de manière à maintenir le pH du milieu réactionnel à une valeur de 8,0.

A l'issue de cette dernière addition simultanée, le milieu réactionnel est amené à un pH de 3,9 en 5 minutes par de l'acide sulfurique de concentration égale à 80 g/L.

La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport $Al/SiO2$ de 0,3 % et de l'acide sulfurique jusqu'à atteindre un pH de 6,5. La bouillie résultante (ayant un extrait sec de 11 %) est atomisée au moyen d'un atomiseur à turbines.

EXEMPLE 7

On effectue un procédé comprenant les étapes suivantes :

une réaction de précipitation mettant en oeuvre du silicate de sodium et de l'acide sulfurique,
une étape de filtration-lavage, au moyen d'un filtre-presse,
un séchage au moyen d'un atomiseur à turbines.

La réaction de précipitation de la silice est réalisée par l'enchaînement d'un mélangeur rapide en acier inoxydable de type Hartridge-Roughton, de diamètre d'entrée d de 5 mm (figure), et d'une cuve agitée (160 tours/min) en acier inoxydable de volume égal à 170 L, selon les étapes suivantes.

On introduit simultanément dans le mélangeur rapide pendant 8 minutes et 30 secondes une solution de silicate de sodium (de rapport pondéral $SiO_2/Na_2O$ égal à 3,45), présentant une concentration de 50 g/L et une température de 86 °C, à un débit de 376 L/h, et de l'acide sulfurique, présentant une concentration de 21 g/L et une température de 86 °C, à un débit régulé de manière à maintenir le pH du milieu réactionnel à une valeur de 3,9.

Ce milieu réactionnel est réceptionné dans la cuve agitée, dans laquelle on introduit simultanément une solution de silicate de sodium à un débit régulé de manière à maintenir le pH du milieu réactionnel à une valeur de 4,1. La température est maintenue à 86 °C.

Au terme des 8 minutes et 30 secondes d'addition simultanée, on coupe les alimentations du mélangeur rapide et on introduit, dans la cuve agitée, une solution de silicate de sodium jusqu'à l'obtention d'une valeur de pH égale à 8,0. La température est portée à 92 °C et maintenue à cette valeur jusqu'à la fin de la réaction.

Une nouvelle addition simultanée de silicate de sodium et d'acide sulfurique est réalisée pendant 40 minutes dans la cuve agitée, avec un débit de silicate de sodium de 32 L/h, à la concentration de 235 g/L, et un débit d'acide sulfurique, de concentration de 80 g/L, régulé de manière à maintenir le pH du milieu réactionnel à une valeur de 8,0.

A l'issue de cette dernière addition simultanée, le milieu réactionnel est amené à un pH de 4,0 en 5 minutes par de l'acide sulfurique de concentration égale à 80 g/L.

La bouillie obtenue est filtrée et lavée sur filtre-presse (extrait sec du gâteau de 20 %). Après dilution, le gâteau obtenu est délité mécaniquement, en ajoutant de l'aluminate de sodium (rapport pondéral $Na_2O/Al_2O_3$ de 0,8), dans un rapport Al/SiO2 de 0,3 % et de l'acide sulfurique jusqu'à atteindre un pH de 6,5. La bouillie résultante (ayant un extrait sec de 11 %) est atomisée au moyen d'un atomiseur à turbines.

Les procédés exemplifiés ci-dessus présentent une productivité très satisfaisante en silice.

## Revendications

1. Procédé de préparation de silice précipitée du type comprenant la réaction d'un silicate avec un agent acidifiant ce par quoi l'on obtient une suspension de silice précipitée, puis la séparation et le séchage de cette suspension, **caractérisé en ce que** la précipitation est réalisée de la manière suivante :

   (i) on ajoute simultanément du silicate et de l'agent acidifiant dans un mélangeur rapide, de préférence en mode continu, le pH du milieu réactionnel ($pH_1$) étant compris entre 2 et 5,5, en particulier entre 2 et 5, le temps de passage dans le mélangeur rapide étant inférieur à 1 seconde, en particulier inférieur à 0,5 seconde, par exemple d'au plus 0,3 seconde,
   (ii) on introduit le milieu réactionnel issu de l'étape (i) dans au moins un réacteur agité, en particulier en mode semi-continu, le pH du milieu réactionnel ($pH_2$) dans le réacteur étant régulé entre 2 et 5,5, en particulier entre 2 et 5, de préférence avec $pH_2 \geq pH_1$,
   (iii) on ajoute au milieu réactionnel obtenu à l'issue de l'étape (ii), dans le réacteur agité, du silicate jusqu'à l'obtention d'une valeur du pH du milieu réactionnel comprise entre 7 et 10, en particulier entre 7,5 et 9,5,
   (iv) on ajoute au milieu réactionnel obtenu à l'issue de l'étape (iii), dans le réacteur agité, simultanément, du silicate et de l'agent acidifiant, de telle manière que le pH du milieu réactionnel soit maintenu entre 7 et 10, en particulier entre 7,5 et 9,5,
   (v) on arrête l'addition du silicate tout en continuant l'addition de l'agent acidifiant dans le milieu réactionnel du réacteur agité jusqu'à l'obtention d'une valeur du pH du milieu réactionnel dans le réacteur agité inférieure à 6, de préférence comprise entre 3 et 5,5, par exemple comprise entre 3 et 5

   et **en ce que** l'ensemble de la précipitation est réalisé entre 70 et 95 °C..

2. Procédé selon la revendication 1, **caractérisé en ce que** ledit mélangeur rapide est choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

3. Procédé selon l'une des revendications 1 et 2, caractérisé en ce ce que ledit mélangeur rapide est un mélangeur à jets tangentiels, Hartridge-Roughton ou vortex, comprenant une chambre ayant au moins deux admissions tangentielles par lesquelles entrent séparément le silicate et l'agent acidifiant et une sortie axiale par laquelle sort le milieu réactionnel.

4. Procédé selon la revendication 3, **caractérisé en ce que** les deux admissions tangentielles sont situées symétriquement, et de manière opposée, par rapport à l'axe central de ladite chambre.

5. Procédé selon l'une des revendications 1 à 4, **caractérisé en ce que**, dans l'etape (ii), afin de réguler le pH du milieu réactionnel ($pH_2$) dans le réacteur entre 2 et 5,5, en particulier entre 2 et 5, on ajoute, simultanément au milieu réactionnel issu de l'étape (i), de l'agent acidifiant ou, de préférence, du silicate ou un agent basifiant.

6. Procédé selon l'une des revendications 1 à 5, **caractérisé en ce que** $pH_1$ et $pH_2$ sont compris entre 2,5 et 5, notamment entre 3 et 4,5, par exemple entre 3,5 et 4,5.

7. Procédé selon l'une des revendications 1 à 6, **caractérisé en ce que** $pH_2 \geq pH_1$.

**8.** Procédé selon l'une des revendications 1 à 7, **caractérisé en ce que** la température du milieu réactionnel est comprise entre 70 et 86 °C lors des étapes (i) et (ii).

**9.** Procédé selon l'une des revendications 1 à 8, **caractérisé en ce que** la température du milieu réactionnel est portée, lors de l'étape (iii), à une valeur comprise entre 85 et 95 °C, puis maintenue à cette valeur au cours des étapes (iv) et (v).

**10.** Procédé selon l'une des revendications 1 à 9, **caractérisé en ce que** ledit mélangeur rapide est un mélangeur à jets tangentiels, Hartridge-Roughton ou vortex, comprenant une chambre ayant au moins deux admissions tangentielles par lesquelles entrent séparément le silicate et l'agent acidifiant et une sortie axiale par laquelle sort le milieu réactionnel, les deux admissions tangentielles étant de préférence situées symétriquement par rapport à l'axe central de ladite chambre.

**Patentansprüche**

**1.** Verfahren zur Herstellung von gefälltem Siliziumdioxid des Typs, umfassend die Umsetzung eines Silikats mit einem Ansäuerungsmittel, wodurch man eine Suspension von gefälltem Siliziumdioxid erhält, und das Abtrennen und Trocknen dieser Suspension, **dadurch gekennzeichnet, dass** die Fällung wie folgt durchgeführt wird:

(i) man gibt gleichzeitig Silikat und Ansäuerungsmittel in einen Schnellmischer, vorzugsweise im Durchlaufmodus, wobei der pH-Wert des Reaktionsmediums ($pH_1$) zwischen 2 und 5,5, insbesondere zwischen 2 und 5 beträgt, die Verweildauer im Schnellmischer weniger als 1 Sekunde, insbesondere weniger als 0,5 Sekunden, zum Beispiel höchsten 0,3 Sekunden beträgt,

(ii) man überführt das aus Schritt (i) erhaltene Reaktionsmedium in mindestens einen Rührreaktor, insbesondere im halbkontinuierlichen Modus, wobei der pH-Wert des Reaktionsmediums ($pH_2$) im Reaktor auf zwischen 2 und 5,5, insbesondere zwischen 2 und 5 eingestellt wird, wobei vorzugsweise $pH_2 \geq pH_1$,

(iii) man gibt zu dem nach Schritt (ii) erhaltenen Reaktionsmedium im Rührreaktor Silikat hinzu, bis ein pH-Wert des Reaktionsgemisches zwischen 7 und 10, insbesondere zwischen 7,5 und 9,5 erhalten wird,

(iv) man gibt zu dem nach Schritt (iii) erhaltenen Reaktionsmedium im Rührreaktor gleichzeitig Silikat und Ansäuerungsmittel derart hinzu, dass der pH-Wert des Reaktionsmediums bei zwischen 7 und 10, insbesondere zwischen 7,5 und 9,5 gehalten wird,

(v) man beendet die Zugabe von Silikat und fährt gleichzeitig mit der Zugabe des Ansäuerungsmittels in das Reaktionsmedium des Rührreaktors fort, bis ein pH-Wert des Reaktionsmediums im Rührreaktor erhalten wird, der weniger als 6, vorzugsweise zwischen 3 und 5,5, zum Beispiel zwischen 3 und 5 beträgt,

und dadurch, dass die gesamte Fällung bei zwischen 70 und 95°C durchgeführt wird.

**2.** Verfahren nach Anspruch 1, **dadurch gekennzeichnet, dass** der Schnellmischer aus symmetrischen T- oder Y-Mischern (oder -Rohren), asymmetrischen T- oder Y-Mischern (oder -Rohren), Tangentialstrahlmischern, Hartridge-Roughton-Mischern, Wirbelmischern und Rotor-Stator-Mischern ausgewählt ist.

**3.** Verfahren nach einem der Ansprüche 1 und 2, **dadurch gekennzeichnet, dass** der Schnellmischer ein Tangentialstrahlmischer, ein Hartridge-Roughton-Mischer oder ein Wirbelmischer ist, umfassend eine Kammer mit mindestens zwei tangentialen Einlässen, durch die separat das Silikat und das Ansäuerungsmittel eintreten, und einen axialen Auslass, durch den das Reaktionsmedium austritt.

**4.** Verfahren nach Anspruch 3, **dadurch gekennzeichnet, dass** die zwei tangentialen Einlässe symmetrisch und gegenüber, in Bezug auf die Mittelachse der Kammer, angeordnet sind.

**5.** Verfahren nach einem der Ansprüche 1 bis 4, **dadurch gekennzeichnet, dass** man in Schritt (ii) zur Einstellung des pH-Werts des Reaktionsmediums ($pH_2$) im Reaktor auf zwischen 2 und 5,5, insbesondere zwischen 2 und 5, zu dem aus Schritt (i) erhaltenen Reaktionsgemisch gleichzeitig Ansäuerungsmittel oder vorzugsweise Silikat oder ein Basifizierungsmittel zugibt.

**6.** Verfahren nach einem der Ansprüche 1 bis 5, **dadurch gekennzeichnet, dass** $pH_1$ und $pH_2$ zwischen 2,5 und 5, insbesondere zwischen 3 und 4,5, zum Beispiel zwischen 3,5 und 4,5 betragen.

**7.** Verfahren nach einem der Ansprüche 1 bis 6, **dadurch gekennzeichnet, dass** $pH_2 \geq pH_1$.

8. Verfahren nach einem der Ansprüche 1 bis 7, **dadurch gekennzeichnet, dass** die Temperatur des Reaktionsmediums während der Schritte (i) und (ii) zwischen 70 und 86°C beträgt.

9. Verfahren nach einem der Ansprüche 1 bis 8, **dadurch gekennzeichnet, dass** die Temperatur des Reaktionsmediums während Schritt (iii) auf einen Wert zwischen 85 und 95°C erhöht und dann im Verlauf der Schritte (iv) und (v) bei diesem Wert gehalten wird.

10. Verfahren nach einem der Ansprüche 1 bis 9, **dadurch gekennzeichnet, dass** der Schnellmischer ein Tangentialstrahlmischer, ein Hartridge-Roughton-Mischer oder ein Wirbelmischer ist, umfassend eine Kammer mit mindestens zwei tangentialen Einlässen, durch die separat das Silikat und das Ansäuerungsmittel eintreten, und einen axialen Auslass, durch den das Reaktionsmedium austritt, wobei die beiden tangentialen Einlässe vorzugsweise symmetrisch in Bezug auf die Mittelachse der Kammer angeordnet sind.

**Claims**

1. Method for preparing precipitated silica, of the type comprising reacting a silicate with an acidifying agent for obtaining a suspension of precipitated silica, and separating and drying this suspension, **characterized in that** the precipitation is carried out as follows:

   (i) silicate and acidifying agent are added simultaneously to a fast blender, preferably in continuous mode, the pH of the reaction medium ($pH_1$) being between 2 and 5.5, in particular between 2 and 5, the residence time through the fast blender being shorter than 1 second, in particular shorter than 0.5 second, for example not longer than 0.3 second,
   (ii) the reaction medium issuing from step (i) is introduced into at least one stirred reactor, in particular in semi-continuous mode, the pH of the reaction medium ($pH_2$) in the reactor being regulated between 2 and 5.5, in particular between 2 and 5, preferably with $pH_2 \geq pH_1$,
   (iii) silicate is added to the reaction medium obtained at the end of step (ii), in the stirred reactor, until the pH value of the reaction mixture obtained is between 7 and 10, in particular between 7.5 and 9.5,
   (iv) silicate and acidifying agent are added simultaneously to the reaction medium obtained at the end of step (iii), in the stirred reactor, so that the pH of the reaction medium is maintained between 7 and 10, in particular between 7.5 and 9.5.
   (v) the silicate addition is interrupted while continuing to add acidifying agent to the reaction medium of the stirred reactor until the pH value of the reaction medium obtained in the stirred reactor is lower than 6, preferably between 3 and 5.5, for example between 3 and 5, and **in that** the entire precipitation is carried out between 70 and 95°C.

2. Method according to Claim 1, **characterized in that** said fast blender is selected from symmetrical T or Y blenders (or tubes), asymmetrical T or Y blenders (or tubes) tangential jet blenders, Hartridge-Roughton blenders, vortex blenders, rotor-stator blenders.

3. Method according to either of Claims 1 or 2, **characterized in that** said fast blender is a tangential jet blender, Hartridge-Roughton or vortex blender, comprising a chamber having at least two tangential inlets via which the silicate and acidifying agent enter separately, and an axial outlet via which the reaction medium exits.

4. Method according to Claim 3, **characterized in that** the two tangential inlets are located symmetrically, and in opposition, about the centerline of said chamber.

5. Method according to one of Claims 1 to 4, **characterized in that**, in step (ii), in order to regulate the pH of the reaction medium ($pH_2$) in the reactor between 2 and 5.5, in particular between 2 and 5, acidifying agent or, preferably, silicate or a basifying agent, is added simultaneously to the reaction mixture issuing from step (i).

6. Method according to one of Claims 1 to 5, **characterized in that** $pH_1$ and $pH_2$ are between 2.5 and 5, in particular between 3 and 4.5, for example between 3.5 and 4.5.

7. Method according to one of Claims 1 to 6, **characterized in that** $pH_2 \geq pH_1$.

8. Method according to one of Claims 1 to 7, **characterized in that** the temperature of the reaction medium is between 70 and 86°C during steps (i) and (ii).

9. Method according to one of Claims 1 to 8, **characterized in that** the temperature of the reaction medium is raised, during step (iii), to a value of between 85 and 95°C, and then maintained at this value during steps (iv) and (v).

10. Method according to one of Claims 1 to 9, **characterized in that** said fast blender is a tangential jet blender, Hartridge-Roughton or vortex blender, comprising a chamber having at least two tangential inlets via which the silicate and acidifying agent enter separately, and an axial outlet via which the reaction medium exits, the two tangential inlets preferably being located symmetrically about the centerline of said chamber.

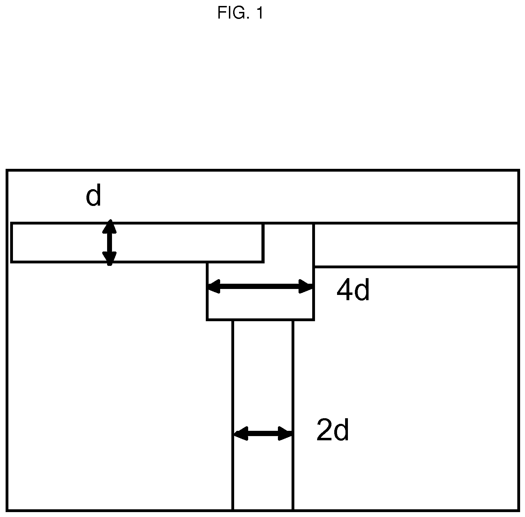

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03016387 A

**Littérature non-brevet citée dans la description**

- **BRUNAUER ; EMMETT ; TELLER.** *The journal of the American Chemical Society,* Février 1938, vol. 60, 309

- *Analytical Chemistry,* Décembre 1956, vol. 28 (12